# EUROPEAN PATENT SPECIFICATION

(11) **EP 4 265 439 B1**
(45) Date of publication and mention of the grant of the patent: **24.12.2025**
(21) Application number: 21906023.3
(22) Date of filing: 01.06.2021
(51) Int. Cl.: B60C 11/03, B60C 11/13

(54) **TIRE**
REIFEN
PNEU

(30) Priority: 17.12.2020 JP 2020209690
(43) Date of publication of application: 25.10.2023
(73) Proprietor: BRIDGESTONE CORPORATION, Chuo-ku Tokyo 104-8340 (JP)
(72) Inventor: UDA, Shiori, Tokyo 104-8340 (JP); KANNO, Hiroshi, Tokyo 104-8340 (JP)
(74) Representative: Marks & Clerk LLP
(86) International application number: PCT/JP2021/020846
(87) International publication number: WO 2022/130656

(56) References cited:
- EP-A1- 1 323 550
- WO-A1-2017/194549
- WO-A1-2019/240198
- CN-A- 108 482 020
- DE-A1- 102012 105 300
- JP-A- 2001 063 319
- JP-A- 2002 036 822
- JP-A- H 092 020
- JP-A- H06 115 318
- US-A1- 2018 141 390

## Description

### Technical Field

The present invention relates to a tire having a groove in the tread portion.

### Background Art

There have been proposed pneumatic tires whose purpose is the reduction of noise at the time of traveling (see, for example, Japanese Patent Application Laid-Open (JP-A) No. H06-99705).

In the pneumatic tire disclosed in JP-A No. H06-99705, an uneven portion is formed continuously along the groove length direction at the bottom portion of a groove, and the sound within the groove is diffusely reflected by the uneven portion. Further, the uneven portion is formed by convex portions, which are isosceles triangular in cross-section, being provided continuously.

CN108482020A discloses a tread pattern groove capable of reducing tire pumping noise. The tread pattern groove is characterized in that at least one arc protrusion protruding towards the groove direction is arranged on a lateral wall of the tread pattern groove, and a chord of an arc contour line of the arc protrusion is perpendicular to the bottom of the tread pattern groove or inclines towards the outer side of the groove relative to the perpendicular line of the bottom surface of the tread pattern groove. The tread pattern groove disclosed can control pattern deformation and the deformation direction. Meanwhile, multiple terms of performance of tire noise performance, tire rolling resistance, water skiing performance and the like can be improved.

DE102012105300A1 discloses tread profile of a vehicle tire - in particular a pneumatic vehicle tire - with grooves which separate radially raised profile elements from one another, wherein the grooves are each delimited in the radial direction inwards by a groove base and on both sides of the groove base in the direction of the adjacent profile element by a groove wall which forms a profile element flank and which extends outwards in the radial direction R of the tire from the groove base, with at least one groove with a main extension direction, the largest directional component of which is formed in the circumferential direction of the vehicle tire, characterized in that in the surface of at least one groove wall and/or the groove base several adjacent arranged and aligned in the direction of extension of the groove of elongated elevations arranged one behind the other in the direction of extension of the groove and projecting into the groove, the extension length of which measured in the direction of extension of the groove is greater than their extension width, wherein the elevations of a first row are each offset in the direction of extension of the groove from the elevations of the adjacent first row and are arranged so as to overlap with an elevation - in particular with two elevations - of the adjacent first row.

EP1323550A1 discloses a tire that has a plurality of radially outer rubber components defining a radially outer surface exposed to fluids having a relative displacement with respect to the rotating tire. At least one radially outer component has projections, the projections being defined by first sides and second sides of unequal length. The first sides have a greater length, delimiting therebetween an angle ranging from 5° to 60° and forming at their intersection an apex. The projections protrude by a height from the radially outer surface from which said first and second sides originate, the height ranging from 0.2 to 100 micrometers. In more than 75% of the projections, any plane tangent to the first side of the projection cuts the radially outer surface at an acute angle.

WO2019/240198A1 discloses a tire comprising: a boundary surface section that constitutes a part of a primary groove section (groove section) partitioning a tread surface of a tread section and is provided, along the primary groove section, in the boundary between the primary groove section and the tread surface; and a plurality of first asterisk projections and second asterisk projections (projecting sections) that are densely provided in the boundary surface section. JP2002036822A discloses pneumatic tire having a groove on a tread surface, and saw blade-like projections that are provided on a side wall surface of the groove.

### SUMMARY OF INVENTION

### Technical Problem

It has been thought to form uneven portions at the groove side walls in order to further reduce noise at the time of traveling.

The grooves of a tread portion are formed by rib-shaped rib portions that are provided at the mold that forms the tire. At the time of removing the tire from the mold, the rib portions move and slip-out along the depths of the grooves toward the opening portions of the grooves. However, if convex portions are provided at the groove side walls, it is easy for the convex portions to catch on the rib portions of the mold, and it is difficult to remove the tire from the mold at which molding was carried out. Therefore, some type of countermeasure thereto is required.

In view of the above-described circumstances, an object of the present invention is to provide a tire that can reduce noise at the time of traveling and that can be easily removed from a mold.

### Solution to Problem

A tire relating to a first aspect is provided as claimed in claim 1.

In the tire relating to the first aspect, the sound that is generated within the groove at the time when the tread portion contacts the road surface is diffusely reflected by the plural projections provided at the groove side walls, and, for example, noise such as air column resonance sound, air pumping noise and the like can be reduced.

Further, as seen in a cross-section in the width direction of the groove, the apex of the projection is positioned further toward the tread surface side of the tread portion than the width direction central portion of the base of the projection. Therefore, the angle of inclination of the side wall that is at the groove bottom side of the projection, with respect to a normal line that stands at the groove side wall, is large. Thus, in a case in which the rib portions of the mold move along the groove depth directions toward the groove opening portions, it is difficult for the rib portions to catch on the projections, and it is easy to pull the rib portions out from the grooves.

In a tire relating to a second aspect, in the tire relating to the first aspect, the projections are not formed at boundary surface portions at the groove side walls, the boundary surface portions contacting the road surface at a time at when the tread portion contacts the road surface and compressively deforms.

When the tread portion contacts the road surface, the tread portion is compressively deformed due to the vehicle weight. When the tread portion is compressively deformed, the groove side walls deform so as to bulge-out toward the groove inner side, and portions, which are at the tread portion tread surface sides, of the groove side walls contact the road surface. In particular, if chamfering is carried out on the corner portions that are formed by the tread portion tread surface and the groove side walls, it is easy for the chamfered portions to contact the road surface.

Given that the groove side wall portions, which contact the road surface at the time when the tread portion contacts the road surface and is compressively deformed, are boundary surface portions, in the tire relating to the second aspect, projections are not provided at the boundary surface portions. Therefore, at the time when the tire travels, the projections contacting the road surface is suppressed.

If plural projections were to contact the road surface, the ground-contact shape would be affected, and there would be the concern that, for example, the wet performance at the time of traveling on a wet surface would deteriorate.

The reason why the ground-contact shape is affected is that, in a case in which plural projections contact the road surface, the contact surface area with respect to the road surface is small as compared with a case in which a tread surface that is a smooth surface contacts the road surface.

However, in the tire relating to the second aspect, because the plural projections do not contact the road surface, a deterioration in the wet performance can be suppressed. Note that, because the ground-contact shape being affected is suppressed, a deterioration in not only the wet performance, but in the dry performance and the on-ice performance as well can be suppressed.

In a tire relating to a third aspect, in the tire relating to the first aspect or the second aspect, the projection is an aggregate projection that is structured to include a plurality of linear projections extending in a radial form from an origin.

In the tire relating to the third aspect, the projection is an aggregate projection that is structured to include plural linear projections that extend in a radial form from an origin. Therefore, as compared with, for example, linear projections that extend only in a uniform direction, it is easy to diffusely reflect sound, and the effect of reducing noise can be improved.

In a tire relating to a fourth aspect which is not according to the present invention, the projections are further provided at a groove bottom of the groove.

In the tire relating to the fourth aspect, the projections are provided at the groove bottom of the groove as well. Therefore, the sound that hits the groove bottom also can be diffusely reflected, and the effect of reducing noise can be improved as compared with a case in which projections are not provided at the groove bottom.

In a tire relating to a fifth aspect, in the tire of any one of the first aspect through the third aspect, a height of the projection is set within a range of from 0.1 to 1.0 mm.

If the height of the projection is less than 0.1 mm, there are cases in which the effect of diffusely reflecting sound and reducing noise is insufficient.

On the other hand, if the height of the projection exceeds 1.0 mm, there are cases in which effects on the flow of water within the groove at the time of traveling on a wet surface are produced.

Accordingly, it is preferable that the height of the projection be set within the range of 0.1 ~ 1.0 mm.

In a tire relating to a sixth aspect, in the tire of any one of the first aspect through the third or fifth aspect, the plurality of projections are provided densely at the groove side walls.

In the tire relating to the sixth aspect, because the plural projections are provided densely at the groove side walls, it is easy to diffusely reflect sound, and the effect of reducing noise can be improved, as compared with a case in which the projections are not provided densely.

### Advantageous Effects of Invention

As described above, in accordance with the tire of the present invention, there are the effects that noise at the time of traveling can be reduced, and the tire can be easily removed from a mold.

### BRIEF DESCRIPTION OF DRAWINGS

Fig. 1 is a cross-sectional view along a tire rotational axis, illustrating a tread portion of a tire relating to a first embodiment of the present invention.
Fig. 2 is a cross-sectional view in which the tread portion is cut along a groove width direction, and illustrates a groove that is formed in the tread portion.
Fig. 3 is a cross-sectional view illustrating projections provided at a groove side wall.
Fig. 4 is a cross-sectional view illustrating a groove side wall of the tire relating to a modified example.
Fig. 5 is a cross-sectional view illustrating the projection of the tire relating to another modified example.
Fig. 6 is a cross-sectional view illustrating the projection of the tire relating to yet another modified example.
Fig. 7 is a plan sectional view illustrating a groove side wall at which asterisk projections of a tire relating to a second embodiment are provided.
Fig. 8 is an enlarged plan view illustrating the asterisk projections.
Fig. 9A is a cross-sectional view of a linear projection.
Fig. 9B is a cross-sectional view of a linear projection relating to a comparative example in which *α* is 0°.

### DESCRIPTION OF EMBODIMENTS

### [First Embodiment]

A tire 10 relating to a first embodiment of the present invention is described hereinafter with reference to the drawings.

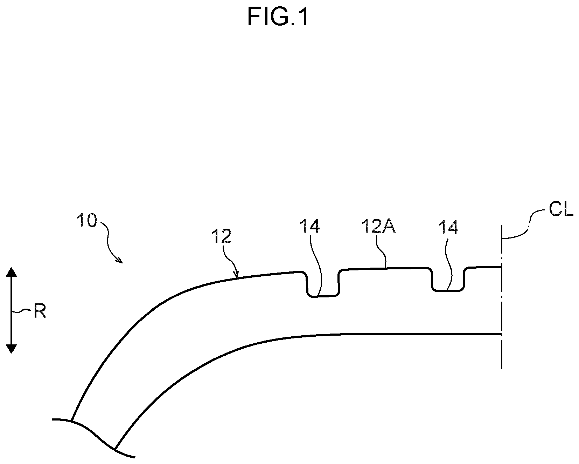

The tire 10 of the present embodiment illustrated in Fig. 1 is similar to a general pneumatic tire except for the structure of grooves 14 that are described later, and therefore, explanation relating to the internal structure of the tire 10 is omitted.

The grooves 14 that serve as main grooves for drainage extend along the tire circumferential direction in a tread surface 12A of a tread portion 12 of the tire 10.

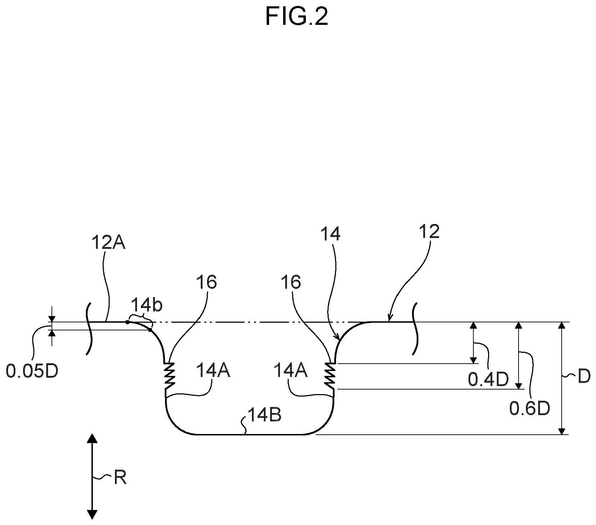

As illustrated in Fig. 2, plural projections 16 are formed in the groove 14 at groove side walls 14A at the groove width direction both sides. The projections 16 of the present embodiment are rib-shaped, and are formed along the length direction of the groove 14.

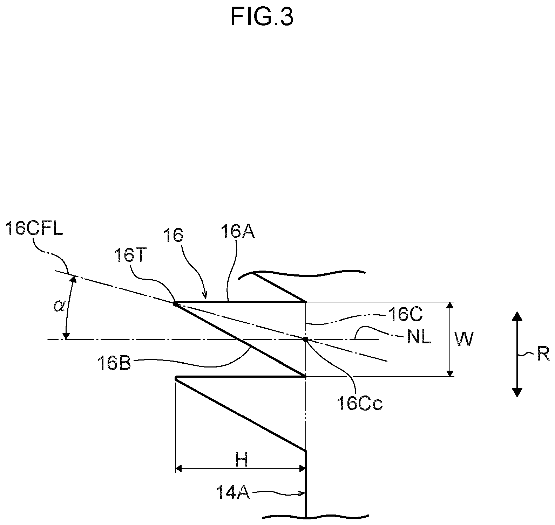

As illustrated in Fig. 3, as seen in a width direction cross-section of the groove 14, the projection 16 of the present embodiment is formed in a substantially triangular shape that is a shape tapered toward an apex 16T. Note that a side wall 16A of the projection 16 that is at the side of the tread surface 12A of the tread portion 12, and a side wall 16B that is at a groove bottom 14B side, are rectilinear as seen in cross-section, but may be curved.

The position of the apex 16T of the projection 16 is offset toward the tread surface 12A side (the upper side in the drawing of Fig. 3), with respect to a projection width direction center 16Cc of a base (the boundary portion between the projection 16 and the groove side wall 14A illustrated by the two-dot chain line) 16C of the projection 16. In other words, the apex 16T is positioned further toward the tread surface 12A side than normal line NL that stands at the groove side wall 14A at the projection width direction center 16Cc of the base 16C.

Note that, given that the angle formed by the normal line NL and projection virtual central line 16CFL, which connects the apex 16T and the projection width direction center 16Cc of the base 16C, is *α*, *α* is greater than 0° and is preferably set within the range of 5° ~ 40°.

Further, height H of the projection 16, which is measured in the direction orthogonal to the groove side wall 14A, is preferably set within the range of 0.1 ~ 1.0 mm. The ratio of the height H of the projection 16 to width W of the base 16C of the projection 16 is not particularly limited, but is preferably set within the range of H/W = 0.8 ~ 6.0.

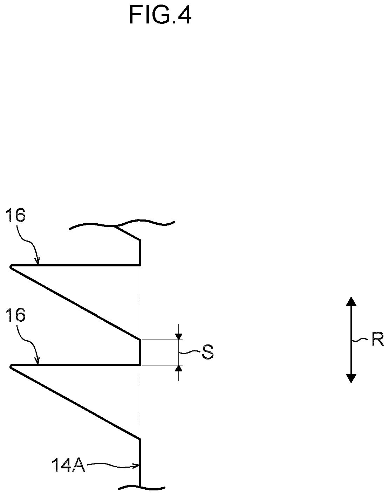

In the present embodiment, the plural projections 16 are provided continuously without gaps therebetween in the depth direction of the groove side walls 14A. In other words, the plural projections 16 are provided densely. Note that, the plural projections are provided continuously without gaps therebetween as illustrated in Figs. 2 and 3, but, as illustrated in Fig. 4, a slight gap S may be provided between the projection 16 and the projection 16. Note that in the present embodiment, the projections 16 are considered to be dense if the dimension of the gap S is less than or equal to W × 1/2 (as an example of an actual dimension, less than or equal to 0.3 mm).

Note that, as illustrated in Fig. 2, at the tire 10 of the present embodiment, the projections 16 are provided in the entire range of 40 ~ 60% of groove depth D of the groove side walls 14A. However, it suffices for the range in which the projections 16 are provided to be provided at any region that is within the range of 40 ~ 60% of the groove depth D.

Further, given that the portion of the groove side wall 14A, which portion contacts the road surface at the time when the tread portion 12 contacts the ground, is boundary surface portion 14b, it is better to avoid providing the projections 16 at the boundary surface portion 14b. In the present embodiment, the boundary surface portion 14b means the region of the groove side wall 14A that is to 5% of the groove depth D from the tread surface 12A.

Note that the "the tread portion 12 contacts the ground" that is mentioned above is when a tire that is a pneumatic tire is mounted to the standard rim prescribed in the JATMA YEAR BOOK (2020, the standards of The Japan Automobile Tyre Manufacturers Association, Inc.), and is filled to an internal pressure of 100% of the air pressure (maximum air pressure) corresponding to the maximum load capacity (the loads that are in bold type in the Internal Pressure - Load Capacity table of correspondence) in the Applicable Size / Ply Rating in the JATMA YEAR BOOK, and is loaded to the maximum load capacity. When TRA standards or ETRTO standards are used in the region of usage or the region of manufacture, those standards are followed.

Note that the boundary portion between the groove side wall 14A and the tread surface 12A of the tread portion 12 may be chamfered as illustrated in Fig. 2, or may not be chamfered.

### (Operation, Effects)

Operation, effects of the tire 10 of the present embodiment are described next.

At the tire 10 of the present embodiment, the sound that is generated within the grooves 14 at the time when the tire 10 is used in traveling and the tread portion 12 contacts the road surface is diffusely reflected by the plural projections 16 provided at the groove side walls 14A. Therefore, noise such as air column resonance sound, air pumping noise and the like can be reduced.

Further, as seen in a width direction cross-section of the groove, the apex 16T of the projection 16 is positioned further toward the side of the tread surface 12A of the tread portion 12 than the projection width direction center 16Cc of the base 16C of the projection 16. Therefore, when comparing the side wall 16A at the tread surface side and the side wall 16B at the groove bottom side of the projection 16, the angle of inclination, with respect to the normal line NL that stands at the groove side wall 14A, of the side wall 16B that is at the groove bottom side of the projection 16 is greater than that of the side wall 16A that is at the tread surface side. In other words, the angle of inclination of the side wall 16B that is at the groove bottom side is large in order to facilitate removal from the mold. Therefore, in a case in which the rib portions (not illustrated) of the mold that vulcanization-molds the tire 10 move along the groove depth directions toward the groove opening portions, it is difficult for the rib portions to catch on the projections 16, and it is easy to pull the rib portions out from the grooves 14. In other words, it is easy to remove the tire 10 from the mold.

Moreover, at the tire 10 of the present embodiment, the projections 16 are not provided at the boundary surface portions 14b that are partial regions at the tread surface 12A sides of the groove side walls 14A of the groove 14. Therefore, when the tire travels, the projections 16 contacting the road surface and affecting the ground-contact shape can be suppressed, e.g., affecting the wet performance, the dry performance, the on-ice performance, and the like can be suppressed.

Note that if the angle *α* that is formed by the normal line NL and the projection virtual central line 16CFL, which connects the apex 16T and the projection width direction center 16Cc of the base 16C, does not exceed 0°, it is difficult to remove the tire 10 from the mold. On the other hand, if the angle *α* exceeds 40°, the apparent length of the projection 16 is long, the resistance to pulling-out is large, and there is the concern that the rubber will be damaged.

Accordingly, it is preferable that the angle *α* at the projection 16 be set within the range of from 5° to 40°.

Further, if the height H of the projection 16, which is measured in the direction orthogonal to the groove side wall 14A, is less than 0.1 mm, there are cases in which the effect of diffusely reflecting the sound and reducing the noise is insufficient.

On the other hand, if the height of the projection exceeds 1.0 mm, there are cases in which effects on the flow of water within the groove 14 at the time of traveling on a wet surface are produced.

Accordingly, it is preferable to set the height H of the projection 16 within the range of from 0.1 mm to 1.0 mm. Note that it is more preferable to set the height H of the projection 16 within the range of from 0.2 mm to 0.8 mm.

Further, if the ratio H/W of the height H of the projection 16 and the width W of the base 16C of the projection 16 is less than 0.8, it is difficult to diffusely reflect sound, and there are cases in which the effect of reducing noise is insufficient.

On the other hand, if the ratio H/W exceeds 6.0, the bending rigidity in the groove depth direction of the projections 16 is low, and there is the concern that the projections 16 will be damaged at the time of mold removal.

Accordingly, it is preferable to set the ratio H/W of the height H of the projection 16 and the width W of the base 16C of the projection 16 to be in the range of 0.8 ~ 6.0.

Note that, as illustrated in Fig. 2, at the tire 10 of the present embodiment, the projections 16 are provided in the entire range of from 40 to 60% of the groove depth D of the groove side walls 14A. However, in a form which is not according to the present invention, the range in which the projections 16 are provided may be provided at other than the range of 40 ~ 60% of the groove depth D of the groove side walls 14A (but while avoiding the boundary surface portions 14b), and may be formed at the groove bottom 14B. There are no particular stipulations on the angle *α* for the projections 16 that are provided at the groove bottom 14B.

By providing the projections 16 also at other than the range of from 40 to 60% of the groove depth D of the groove side walls 14A or providing the projections 16 at the groove bottom 14B, the sound within the groove 14 can be diffusely reflected better, and noise can be reduced more.

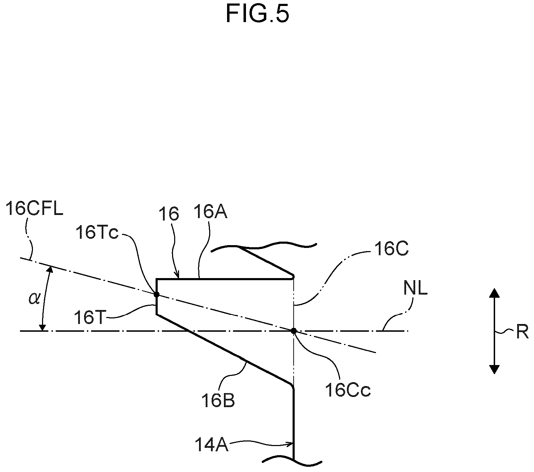

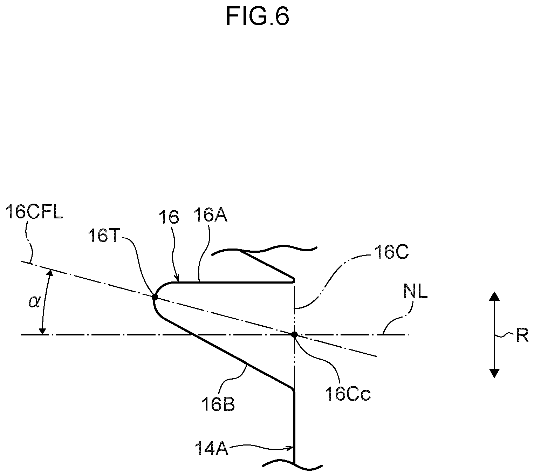

Note that, although the cross-sectional shape of the projections 16 of the present embodiment is substantially triangular, the cross-sectional shape of the projections 16 is not limited to triangular, and may be trapezoidal as illustrated in Fig. 5 as an example. In a case in which the apex 16T of the projection 16 is a flat surface, the line, which connects the projection width direction center 16Cc of the base 16C and a width direction central portion 16Tc of the apex 16T, is the projection virtual central line 16CFL. Further, the apex 16T of the projection 16 may be circular-arc-shaped (a curved shape) such as illustrated in Fig. 6.

### [Second Embodiment]

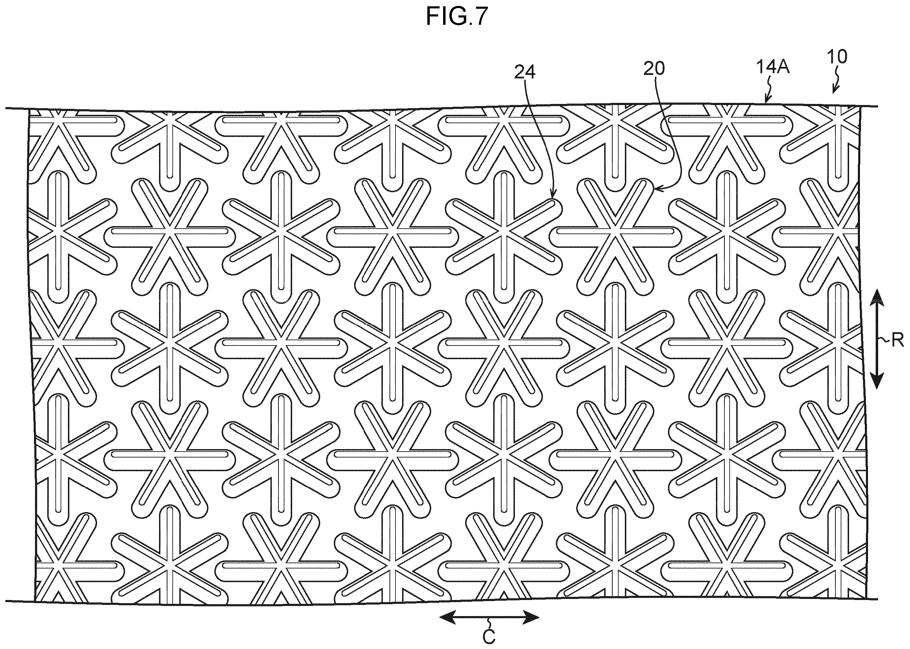

The tire 10 relating to the second embodiment of the present invention is described next in accordance with Fig. 7 through Fig. 9A. Note that structures that are the same as those of the first embodiment are denoted by the same reference numerals, and description thereof is omitted.

Instead of the plural projections 16 of the first embodiment, as illustrated in Fig. 7, plural asterisk projections 20 and asterisk projections 24 are formed at the groove side walls 14A of the grooves 14 of the tire 10 of the present embodiment, alternately in a tire circumferential direction C and a tire radial direction R with gaps therebetween.

The asterisk projections 20 and the asterisk projections 24 are examples of the aggregate projections of the present invention.

The asterisk projection 20 has plural linear projections 22 that extend rectilinearly in radial directions from origin O1. In other words, the plural linear projections 22 extend in respectively different directions from the origin O1. In the present embodiment, the plural linear projections 22 are provided so as to form angles of 60° around the origin O1.

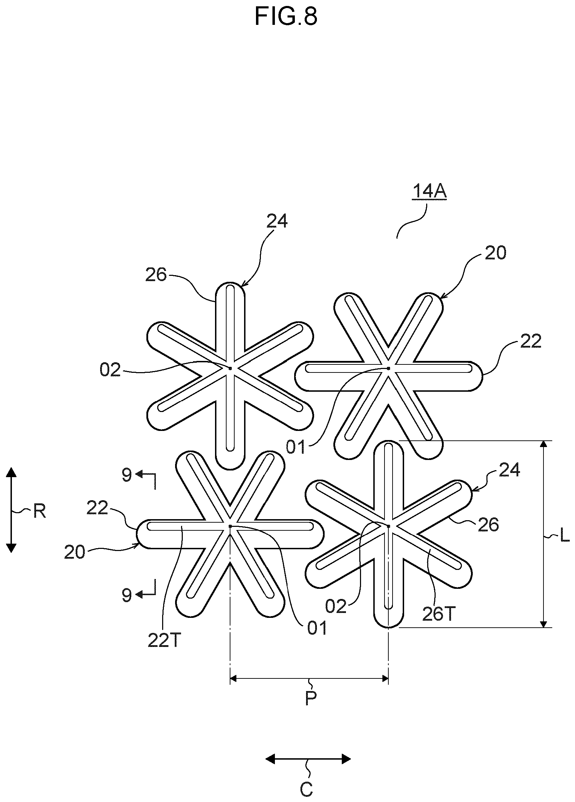

At the asterisk projection 20, the position of apex 22T of each linear projection 22 of the asterisk projection 20 is near to the tread surface 12A side (the upper sides in the drawings of Figs. 7 and 8).

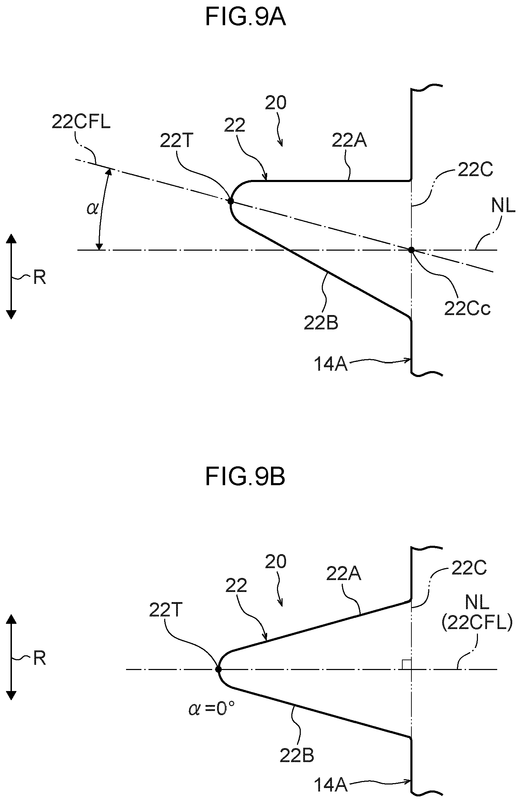

The cross-section when the linear projection 22, which extends along the tire circumferential direction C, of the asterisk projection 20 is cut at a right angle to the tire circumferential direction C is illustrated in Fig. 9A. The position of the apex 22T of the linear projection 22 that extends in the tire circumferential direction C is near to the tread surface 12A side (the upper sides in the drawings of Fig. 9). In other words, the apex 22T is positioned further toward the tread surface 12A side than the normal line NL that stands at the groove side wall 14A at a projection width direction center 22Cc of base 22C of the linear projection 22. Moreover, in other words, the linear projection 22 that extends along the tire circumferential direction C is inclined toward the tread surface 12A side, and the other linear projections 22 also are similarly inclined toward the tread surface 12A side.

Further, the asterisk projection 24 has plural linear projections 26 that extend rectilinearly in radial directions from origin O2. In other words, the plural linear projections 26 extend in respectively different directions from the origin O2. In the present embodiment, the plural linear projections 26 are provided so as to form angles of 60° around the origin O2.

Note that, in the same way as the asterisk projections 20, at the asterisk projections 24 as well, the position of apex 26T of the linear projection 26 is near to the tread surface 12A side (the upper sides in the drawings of Figs. 7 and 8).

The interval (hereinafter called "interval P") between the origin O1 of one asterisk projection 20 and the origin O2 of another asterisk projection 24 that are adjacent to one another in the tire radial direction R and the tire circumferential direction C is preferably set within the range of from 0.2 mm to 1.0 mm.

In the present embodiment, if the interval P is less than or equal to 1.0 mm, the asterisk projections 20 are considered to be dense.

Further, longest extension length L at the asterisk projection 20 (the same holds for the asterisk projection 24 as well) is preferably set to be longer than the interval P.

In the present embodiment, the longest extension lengths L at the asterisk projections 20, 24 are set to be longer than the interval P, and the linear projection 22 of the asterisk projection 20 is inserted between the linear projection 26 and the linear projection 26 of the adjacent asterisk projection 24, and the linear projection 26 of the asterisk projection 24 is inserted between the linear projection 22 and the linear projection 22 of the adjacent asterisk projection 20.

### (Operation, Effects)

Operation, effects of the tire 10 relating to the present embodiment are described next. In the same way as the projections 16 of the first embodiment,
the asterisk projections 20 and the asterisk projections 24 of the present embodiment also diffusely reflect the sound that is generated within the grooves 14, and therefore, can reduce noise such as air column resonance sound, air pumping noise and the like.

Further, at the tire 10 of the present embodiment, the linear projections 22 of the asterisk projections 20 provided at the groove side walls 14A extend from the origin O1 in respectively different directions, and further, the linear projections 26 of the asterisk projections 24 extend from the origin O2 in respectively different directions. Therefore, it is easier to diffusely reflect noise, and the noise reducing effect can be made to be better, than the tire 10 of the first embodiment that is provided with the projections 16 that extend in the same direction.

Further, at the tire 10 of the present embodiment, the longest extension lengths L at the asterisk projections 20, 24 are set to be longer than the intervals P, and the linear projection 22 of the asterisk projection 20 is inserted between the linear projection 26 and the linear projection 26 of the adjacent asterisk projection 24, and the linear projection 26 of the asterisk projection 24 is inserted between the linear projection 22 and the linear projection 22 of the adjacent asterisk projection 20. Accordingly, it is easy to place the asterisk projections 20 and the asterisk projections 24 close to one another, and the plural asterisk projections 20 and asterisk projections 24 can be arranged densely. By arranging the asterisk projections 20 and the asterisk projections 24 densely in this way, noise at the time of traveling can be reduced more.

Further, the asterisk projection 20 on the whole and the asterisk projection 24 on the whole are inclined toward the tread surface 12A side of the tread portion 12.

As an example, as illustrated in Fig. 9A, at the linear projection 22 that extends in the tire circumferential direction, the angle of inclination of a side surface 22B at the groove bottom side (with respect to the normal line NL that stands at the groove side wall 14A) is made large in order to facilitate removal from the mold (compare with Fig. 9B in which *α* = 0°). Therefore, in a case in which the rib portions (not illustrated) of the mold that vulcanization-molds the tire 10 move along the groove depth directions toward the groove opening portions, it is difficult for the rib portions to catch on the linear projections 22, and it is easy to pull the rib portions out from the grooves 14.

Accordingly, in the same way as the tire 10 of the first embodiment, the tire 10 of the present embodiment as well can easily be removed from the mold at the time of manufacturing, and the moldability thereof can be improved.

Note that, although the asterisk projections 20 are structured by six of the linear projections 22, and the asterisk projections 24 are structured by six of the linear projections 26, the number of the linear projections 22 that structure the asterisk projections 20 and the number of the linear projections 26 that structure the asterisk projections 24 may be 5 or less or may be 7 or more.

Although the linear projections 22 that structure the asterisk projections 20 and the linear projections 26 that structure the asterisk projections 24 are rectilinear as seen in plan view, they may be curved.

Although the asterisk projections 20 and the asterisk projections 24 are separate, the linear projections 22 of the asterisk projections 20 and the linear projections 26 of the asterisk projections 24 may be connected together.

The linear projections 22 of the asterisk projections 20 and the linear projections 26 of the asterisk projections 24 may be the same lengths respectively, or may be different lengths respectively.

### [Other Embodiments]

Although embodiments of the present disclosure have been described above, the present disclosure is not limited to the above, and can, of course, be implemented by being modified in various ways other than the above, within a scope as defined by the appended claims.

The grooves in which the projections 16 are provided are not limited to the grooves that extend along the tire circumferential direction, and may be grooves that extend along the tire width direction (so-called lug grooves) or grooves that are inclined with respect to the tire circumferential direction, or may be grooves that extend in zigzag forms or grooves that extend so as to be curved, and can be applied to all grooves that generate noise regardless of the size (the width, the depth) of the groove and the form thereof when the tread portion is seen in plan view.

The type of the tire to which the present invention is applied does not matter, and may be a tire for a passenger vehicle, for a truck/bus, for a motorcycle, or the like. Further, the tire to which the present invention is applied is not limited to a pneumatic tire, and may be a non-pneumatic tire (a solid tire) that is not filled with air. The present invention can be applied to any tire provided that is a tire having a groove in the tread portion thereof.

## Claims

1. A tire (10) comprising:
a tread portion (12) contacting a road surface;
a groove (14) provided at the tread portion (12); and
a plurality of projections (16, 22, 26) provided at groove side walls (14A) of the groove (14), wherein, as seen in a cross-section in a width direction of the groove (14), an apex (16T) of the projection (16, 20, 24) is positioned further toward a tread surface (12A) side of the tread portion (12) than a width direction central portion (16Cc) of a base (16C) of the projection (16, 20, 24),
**characterised in that**
the plurality of projections (16, 20, 24) are provided only within a region of from 40 to 60% of a groove depth (D) of the groove side walls (14A).

2. The tire (10) of claim 1, wherein the projection (20, 24) is an aggregate projection (20, 24) that is structured to include a plurality of linear projections (22, 26) extending in radial form from an origin (O1, O2).

3. The tire (10) of claim 1 or claim 2, wherein a height of the projection (16, 20, 24) is set within a range of from 0.1 to 1.0 mm.

4. The tire (10) of claim 1 or claim 3 when dependent on claim 1, wherein the plurality of projections (16) are provided with no gap therebetween in the depth direction of the groove side walls (14A) or with a gap (S) therebetween in the depth direction of the groove side walls (14A) that is less than or equal to half the width (W) of the base (16C) of the projection (16) at the groove side walls (14A).

5. The tire (10) of claim 2 or claim 3 when dependent on claim 2, wherein the interval (P) between the origin (O1) of one aggregate projection (20) and the origin (O2) of another aggregate projection (24) that are adjacent to one another in the tire radial direction (R) and the tire circumferential direction (C) is less than or equal to 1.0 mm.

## Patentansprüche

1. Reifen (10), umfassend:
einen Laufflächenabschnitt (12), der eine Straßenoberfläche berührt;
eine Nut (14), die an dem Laufflächenabschnitt (12) bereitgestellt ist; und
eine Vielzahl von Vorsprüngen (16, 22, 26), die an Nutseitenwänden (14A) der Nut (14) bereitgestellt sind, wobei, im Querschnitt in einer Breitenrichtung der Nut (14) betrachtet, ein Scheitelpunkt (16T) des Vorsprungs (16, 20, 24) weiter in Richtung einer Gewindeoberflächenseite (12A) des Laufflächenabschnitts (12) positioniert ist als ein in Breitenrichtung mittlerer Abschnitt (16Cc) einer Basis (16C) des Vorsprungs (16, 20, 24),
**dadurch gekennzeichnet, dass** die Vielzahl von Vorsprüngen (16, 20, 24) nur innerhalb eines Bereichs von 40 bis 60 % einer Nuttiefe (D) der Nutseitenwände (14A) bereitgestellt ist.

2. Reifen (10) nach Anspruch 1, wobei der Vorsprung (20, 24) ein Gesamtvorsprung (20, 24) ist, der dazu strukturiert ist, eine Vielzahl linearer Vorsprünge (22, 26) einzuschließen, die sich radial von einem Ursprung (O1, O2) erstrecken.

3. Reifen (10) nach Anspruch 1 oder Anspruch 2, wobei eine Höhe des Vorsprungs (16, 20, 24) in einem Bereich von 0,1 bis 1,0 mm eingestellt ist.

4. Reifen (10) nach Anspruch 1 oder Anspruch 3, wenn dieser von Anspruch 1 abhängig ist, wobei die Vielzahl von Vorsprüngen (16) ohne Spalt in der Tiefenrichtung der Nutseitenwände (14A) oder mit einem Spalt (S) in der Tiefenrichtung der Nutseitenwände (14A) bereitgestellt ist, der kleiner oder gleich der halben Breite (W) der Basis (16C) des Vorsprungs (16) an den Nutseitenwänden (14A) ist.

5. Reifen (10) nach Anspruch 2 oder Anspruch 3, wenn dieser von Anspruch 2 abhängig ist, wobei der Abstand (P) zwischen dem Ursprung (01) eines Gesamtvorsprungs (20) und dem Ursprung (O2) eines anderen Gesamtvorsprungs (24), die in der Reifenradialrichtung (R) und Reifenumfangsrichtung (C) aneinandergrenzen, kleiner oder gleich 1,0 mm ist.

## Revendications

1. Pneu (10), comprenant :
une partie de bande de roulement (12) venant en contact avec une surface de route ;
une rainure (14) disposée au niveau de la partie de bande de roulement (12) ; et
une pluralité de saillies (16, 22, 26) disposées au niveau de parois latérales de rainure (14A) de la rainure (14), dans lequel, comme vu en section transversale dans une direction de largeur de la rainure (14), un sommet (16T) de la saillie (16, 20, 24) est positionné plus loin d'un côté surface de bande de roulement (12A) de la partie de bande de roulement (12) qu'une partie centrale dans la direction de la largeur (16Cc) d'une base (16C) de la saillie (16, 20, 24),
**caractérisé en ce que** la pluralité de saillies (16, 20, 24) sont disposées uniquement dans une région de 40 à 60 % d'une profondeur de rainure (D) des parois latérales de rainure (14A).

2. Pneu (10) selon la revendication 1, dans lequel la saillie (20, 24) est une saillie agrégée (20, 24) qui est structurée pour inclure une pluralité de saillies linéaires (22, 26) s'étendant sous une forme radiale à partir d'une origine (O1, O2).

3. Pneu (10) selon la revendication 1 ou la revendication 2, dans lequel une hauteur de la saillie (16, 20, 24) est définie dans une plage de 0,1 à 1,0 mm.

4. Pneu (10) selon la revendication 1 ou la revendication 3 lorsqu'elle dépend de la revendication 1, dans lequel la pluralité de saillies (16) sont disposées sans espace entre celles-ci dans la direction de profondeur des parois latérales de rainure (14A) ou avec un espace (S) entre celles-ci dans la direction de profondeur des parois latérales de rainure (14A) qui est inférieur ou égal à la moitié de la largeur (W) de la base (16C) de la saillie (16) au niveau des parois latérales de rainure (14A).

5. Pneu (10) selon la revendication 2 ou la revendication 3 lorsqu'elle dépend de la revendication 2, dans lequel l'intervalle (P) entre l'origine (01) d'une saillie agrégée (20) et l'origine (O2) d'une autre projection agrégée (24) qui sont adjacentes l'une à l'autre dans la direction radiale de pneu (R) et la direction circonférentielle de pneu (C) est inférieur ou égal à 1,0 mm.
